# EUROPEAN PATENT APPLICATION

(11) **EP 4 852 538 A1**
(43) Date of publication of application: **09.12.2026**
(21) Application number: 24920906.5
(22) Date of filing: 31.01.2024
(51) Int. Cl.: H04W 52/14

(54) **SOUNDING REFERENCE SIGNAL SENDING METHOD AND APPARATUS, AND SOUNDING REFERENCE SIGNAL RECEIVING METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); JIANG, Qinyan, Beijing 100022 (CN); ZHANG, Jian, Beijing 100022 (CN); JIN, Liqiang, Beijing 100022 (CN); ZHANG, Qun, Beijing 100022 (CN); ZHAO, Di, Beijing 100022 (CN); LU, Yiwen, Beijing 100022 (CN)
(74) Representative: Haseltine Lake Kempner LLP
(86) International application number: PCT/CN2024/075061
(87) International publication number: WO 2025/160837

(57) **Abstract**

Embodiments of the present application provide a method and an apparatus for transmitting and receiving sounding reference signal (SRS). The method includes: a terminal equipment receives configuration information of sounding reference signal (SRS); wherein the terminal equipment performs first uplink transmission and first downlink transmission with a first transmission reception point (TRP), and/or performs second uplink transmission with a second transmission reception point; and the terminal equipment transmits the second uplink transmission at least according to a power control state for the SRS.

## Description

### TECHNICAL FIELD

Embodiments of the present application relate to the field of communications technologies.

### BACKGROUND

In NR, a multi-Transmission Reception Point (multi-TRP) operation has been supported, including both uplink and downlink transmission. A terminal equipment may maintain communication links with multiple TRPs. For uplink transmission, power control is generally applied. The terminal equipment may estimate a path loss between the terminal equipment and a network device such as a TRP or a gNB based on a downlink pathloss reference signal. The terminal equipment may calculate (or determine) power of uplink transmission based on estimated path loss and some parameters.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

However, the inventors find that in Release 19, an uplink and downlink asymmetric transmission reception point (asymmetric DL single TRP/UL multi-TRP) operation will be introduced, and there is currently no specific solution for specifically how to control power of sounding reference signal (SRS), and SRS power control needs to be enhanced.

To address at least one of the above problems, embodiments of the present application provide a method and an apparatus for transmitting and receiving sounding reference signal (SRS).

According to an aspect of the embodiments of the present application, there is provided a method for transmitting sounding reference signal (SRS), including:
a terminal equipment receives configuration information of sounding reference signal (SRS); wherein the terminal equipment performs first uplink transmission and first downlink transmission with a first transmission reception point (TRP), and/or performs second uplink transmission with a second transmission reception point; and
the terminal equipment transmits the second uplink transmission at least according to a power control state for the SRS.

According to another aspect of the embodiments of the present application, there is provided an apparatus for transmitting sounding reference signal (SRS), including:
a receiving unit configured to receive configuration information of the sounding reference signal (SRS); wherein a terminal equipment performs first uplink transmission and first downlink transmission with a first transmission reception point (TRP), and/or performs second uplink transmission with a second transmission reception point (TRP);
a transmitting unit configured to transmit the second uplink transmission at least according to a power control state for the SRS.

According to another aspect of the embodiments of the present application, there is provided a method for receiving sounding reference signal (SRS), including:
a network device transmites configuration information of sounding reference signal (SRS) to a terminal equipment; wherein the terminal equipment performs first uplink transmission and first downlink transmission with a first transmission reception point, and/or performs second uplink transmission with a second transmission reception point;
the network device receives the second uplink transmission transmitted by the terminal equipment at least according to a power control state for the SRS.

According to another aspect of the embodiments of the present application, there is provided an apparatus for receiving sounding reference signal (SRS), including:
a transmitting unit configured to transmit configuration information of sounding reference signal (SRS) to a terminal equipment; wherein the terminal equipment performs first uplink transmission and first downlink transmission with a first transmission reception point (TRP), and/or performs second uplink transmission with a second transmission reception point;
a receiving unit configured to receive the second uplink transmission transmitted by the terminal equipment at least according to a power control state for the SRS.

According to another aspect of the embodiments of the present application, there is provided a communication system, including:
a network device configured to transmit configuration information of sounding reference signal (SRS) to a terminal equipment; wherein the terminal equipment performs first uplink transmission and first downlink transmission with a first transmission reception point, and/or performs second uplink transmission with a second transmission reception point;
the terminal equipment configured to transmit the second uplink transmission at least according to a power control state for the SRS.

One of beneficial effects of the embodiments of the present application is that the terminal equipment transmits the second uplink transmission at least according to a power control state for the SRS, and accordingly, appropriate power control for the SRS is able to be performed even under uplink and downlink asymmetric TRP operation scenarios, thereby being possible to improve accuracy and reliability of SRS transmission.

With reference to the specification and drawings below, a specific embodiment of the present application is disclosed in detail, which specifies the manner in which the principle of the present application may be adopted. It should be understood that, the scope of the embodiments of the present application is not limited. Within the scope of the clause of the appended claims, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in embodiments of the present application;
FIG. 2 is a schematic diagram of a multi-TRP scenario in embodiments of the present application;
FIG. 3 is a schematic diagram of a method for transmitting sounding reference signal (SRS) in embodiments of the present application;
FIG. 4 is a schematic diagram of a scenario of an uplink and downlink asymmetric TRP operation in embodiments of the present application;
FIG. 5 is a schematic diagram of a method for receiving sounding reference signal (SRS) in embodiments of the present application;
FIG. 6 is a schematic diagram of an apparatus for transmitting sounding reference signal (SRS) in embodiments of the present application;
FIG. 7 is a schematic diagram of an apparatus for receiving sounding reference signal (SRS) in embodiments of the present application;
FIG. 8 is a schematic diagram of a terminal equipment in embodiments of the present application; and
FIG. 9 is a schematic diagram of a network device in embodiments of the present application.

### DETAILED DESCRIPTION

With reference to the drawings, the foregoing and other features of the present application will become apparent through the following specification. The specification and the accompanying drawings specifically disclose the particular embodiments of the present application, showing part of the embodiments in which the principle of the present application can be adopted, it should be understood that the present application is not limited to the described embodiments, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "a/an", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR) and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), and 5G base station (gNB) and etc., and may also include a remote radio head (RRH), a remote radio unit (RRU), a relay, or a low-power node (such as femto, pico, etc.), an Integrated Access and Backhaul (IAB) node or IAB-DU or IAB-donor. The term "base station" may include some or all of their functions, with each base station providing communication coverage to a specific geographic area. The term "cell" can refer to a base station and/or its coverage area, depending on the context in which the term is used. The terms "cell" and "base station" can be interchanged without causing confusion.

In embodiments of the present application, the term "user equipment" (UE) or "terminal equipment or terminal device" (TE) refers, for example, to a device that is connected to the communication network through the network device and receives network services. The terminal equipment can be fixed or movable, and can also be called a mobile station (MS), a terminal, a subscriber station (SS), an access terminal (AT), IAB-MT, a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), a terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter scenarios of embodiments of the present application are illustrated by examples, but which is not limited in the present application.

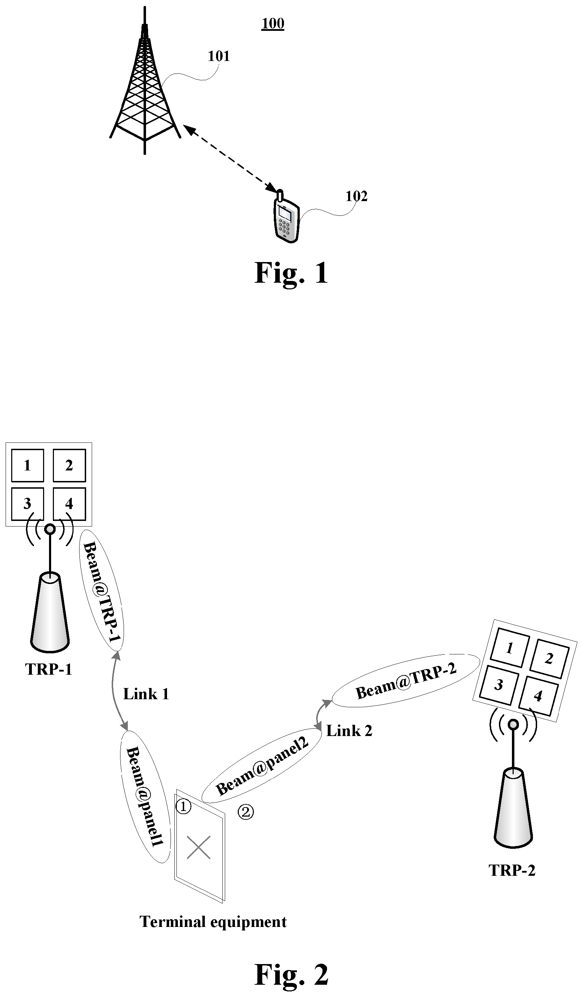

FIG. 1 is a schematic diagram of a communication system in embodiments of the present application, illustrating a case of a terminal equipment and a network device as examples. As shown in FIG. 1, a communication system 100 may include a network device 101 and a terminal equipment 102. For simplicity, FIG. 1 illustrates only one terminal equipment and one network device as examples, but which is not limited in embodiments of the present application, and for example, there may be a plurality of terminal equipments.

In embodiment of the present application, existing services or services that can be implemented in the future may be transmitted between the network device 101 and the terminal equipment 102. For example, these services may include, but are not limited to, enhanced Mobile Broadband (eMBB), massive Machine Type Communication (mMTC), and Ultra-Reliable and Low-Latency Communication (URLLC), and etc.

FIG. 2 is a schematic diagram of a multi-TRP scenario in embodiments of the present application. A TRP may be part of a network device (e.g., gNB) that receives a signal from a terminal equipment, or part of a network device (gNB) that transmits a signal to a terminal equipment. In addition, a TRP may also represent a set of downlink control information (DCI) or a set of reference signals, and so on.

As shown in FIG. 2, in a scenario of a multi-TRP operation, a terminal equipment may have a panel 1 (pannel-1) and a panel 2 (pannel-2); a serving cell may schedule the terminal equipment from two TRPs to provide better physical downlink share channel (PDSCH) coverage, reliability and/or data rate.

There may be two different operation modes for a multi-TRP operation: single-DCI and multi-DCI. For these two modes, control of uplink and downlink operations is performed by a physical layer and medium access control (MAC). In a single-DCI mode, a terminal equipment is scheduled by two TRPs via the same DCI; and in a multi-DCI mode, a terminal equipment is scheduled by a separate DCI for each TRP.

In embodiments of the present application, a signaling may be, for example, Radio Resource Control (RRC) signaling; for example, it is called an RRC message, e.g., including MIB, system information, or a dedicated RRC message; or it is referred to as RRC information element (RRC IE). For example, the signaling may also be Medium Access Control (MAC) signaling; or is also called MAC control element (MAC CE). However, the present application is not limited to this.

In the following explanation, without causing confusion, the terms "PUCCH" and "physical uplink control channel" or "uplink control information" are used interchangeably, and the terms "PUSCH" and "physical uplink data channel" or "uplink data" are also used interchangeably. In addition, transmitting or receiving a PUCCH may be understood as transmitting or receiving uplink control information carried by the PUCCH; transmitting or receiving a PUSCH may be understood as transmitting or receiving uplink data carried by the PUSCH. The terms "PRACH" and "physical random access channel" or "random access information" are used interchangeably. In addition, transmitting or receiving a PRACH may be understood as transmitting or receiving random access information carried by the PRACH.

In embodiments of the present application, an index or identifier of a transmission reception point (TRP) may include: an index of a control resource pool corresponding to the TRP, an index or identifier of the TRP, and an index of a reference signal set (RS set) corresponding to the TRP. Therefore, the term "transmission reception point (TRP)" may also be expressed as "reference signal set" or "control resource pool", etc.

### Embodiments of a First Aspect

The embodiments of the present application provide a method for transmitting sounding reference signal (SRS), explained from a terminal equipment.

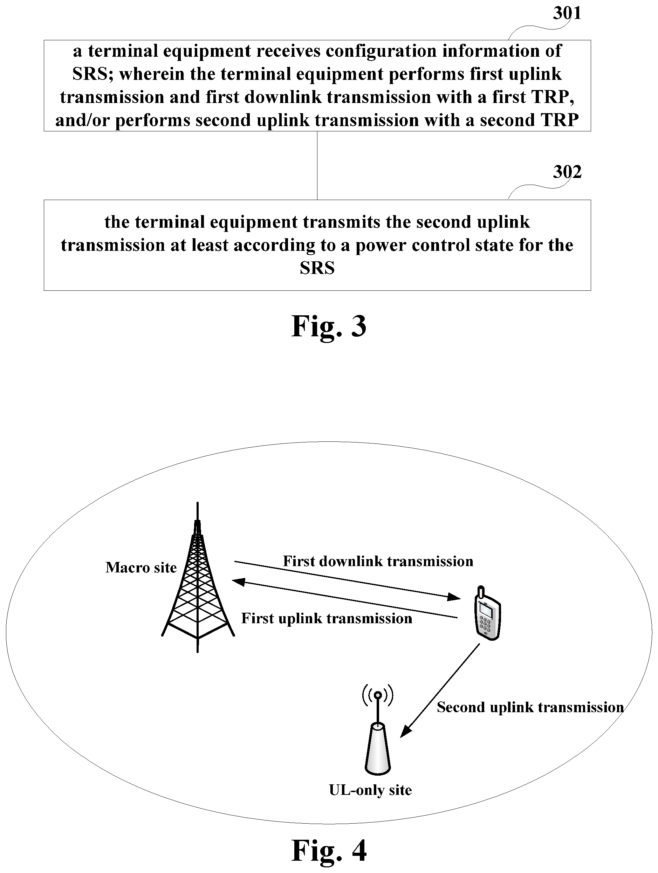

FIG. 3 is a schematic diagram of a method for transmitting sounding reference signal (SRS) in embodiments of the present application, as shown in FIG. 3, the method including:
301: a terminal equipment receives configuration information of sounding reference signal (SRS); wherein the terminal equipment performs first uplink transmission and first downlink transmission with a first transmission reception point (TRP), and/or performs second uplink transmission with a second transmission reception point; and
302: the terminal equipment transmits the second uplink transmission at least according to a power control state for the SRS.

It is worth noting that FIG. 3 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 3 above.

FIG. 4 is a schematic diagram of a scenario of an uplink and downlink asymmetric TRP operation in embodiments of the present application. The uplink and downlink asymmetric TRP operation may also be referred to as asymmetric DL sTRP/UL mTRP operation. For example, as shown in FIG. 4, downlink transmission is based on a single TRP, i.e., a UE only receives downlink transmission from one TRP, while uplink transmission is based on multiple TRPs, i.e., uplink transmission may be directed towards multiple TRPs, such as two TRPs.

As shown in FIG. 4, some UL-only sites (such as a second transmission reception point, hereinafter also referred to as a UL-only TRP or a UL-only site) may be deployed in a macro site (such as a first transmission reception point, hereinafter also referred to as a DL/UL TRP or a DL/UL site). A macro site is a site with DL/UL. That is, downlink transmission comes from a macro site and uplink transmission may be directed towards both the macro site and a UL-only site.

Since the downlink transmission comes only from a site with DL/UL, it is not possible to estimate path loss through a downlink signal for uplink power control of a UL-only site, resulting in a mismatch between uplink transmission and a pathloss reference signal. In embodiments of the present application, the terminal equipment transmits a second uplink transmission (SRS transmission) at least according to a power control state for the SRS, thereby being possible to improve accuracy and reliability of SRS transmission. In addition to the power control state for the SRS, factors related to the power control for SRS transmission also include other parameters. Specifically relevant technologies such as a power calculation formula may be referred to, and will not be repeated here.

In some embodiments, the power control state for the SRS is different from a closed-loop power control state for a physical uplink shared channel (PUSCH).

For example, for an asymmetric DL sTRP/UL mTRP operation, an SRS closed-loop power control state independent of PUSCH may be introduced.

In some embodiments, for at least one of the following SRS usage parameters: codebook, non-codebook (nonCodebook), antenna switching (antennaSwitching) or beam management (beamManagement), an SRS resource set is configured with one of:
a first closed-loop power control state the same as PUSCH;
a second closed-loop power control state the same as PUSCH;
a first closed-loop power control state different from PUSCH;
a second closed-loop power control state different from PUSCH.

In some embodiments, SRS usage parameter(s) are/is codebook and/or non-codebook (nonCodebook), and an SRS resource set is configured with one of:
a first closed-loop power control state the same as PUSCH;
a second closed-loop power control state the same as PUSCH.

In some embodiments, an SRS usage parameter is antenna switching (antennaSwitching), and an SRS resource set is configured with one of:
a first closed-loop power control state different from PUSCH;
a second closed-loop power control state different from PUSCH.

In some embodiments, an SRS usage parameter is antenna switching (antennaSwitching), and the SRS resource set may be configured with a power control state independent of PUSCH and associated with a site (DL/UL site) capable of performing DL/UL.

In some embodiments, an SRS usage parameter is beam management (beamManagement), and an SRS resource set is configured with one of:
a first closed-loop power control state different from PUSCH;
a second closed-loop power control state different from PUSCH.

In some embodiments, for an uplink and downlink asymmetric transmission reception point (asymmetric DL single TRP/UL multi-TRP) operation, one SRS resource set is configured with one power control state; for a same SRS usage parameter, the number of SRS resource sets for an uplink and downlink asymmetric transmission reception point (asymmetric DL single TRP/UL multi-TRP) operation is greater than the number of SRS resource sets for a single transmission reception point (single TRP) operation.

For example, for an asymmetric DL sTRP/UL mTRP operation, one SRS resources set is configured with one power control state. For the same usage parameter, the number of SRS resource sets may be expanded, and for example, the number may be twice that of SRS resource sets with the same usage parameter for a single TRP operation. Alternatively, the number of SRS resource sets is the same as the number of SRS resource sets for a single TRP operation with the same usage parameter.

For another example, the power control state of the SRS resource set may be overridden by MAC CE or DCI.

In some embodiments, for an uplink and downlink asymmetric transmission reception point (asymmetric DL single TRP/UL multi-TRP) operation, one SRS resource set is configured with two power control states, and an applied power control state is indicated by MAC CE and/or DCI.

For example, the two power control states are both different from the power control state of PUSCH. For another example, one of the two power control states is the same as the power control state of PUSCH while the other of the two power control states is different from the power control state of PUSCH. For another example, the two power control states are both the same as the power control state of PUSCH.

For another example, MAC CE or DCI may be used to further indicate which power control state is applied.

In some embodiments, for an uplink and downlink asymmetric transmission reception point (asymmetric DL single TRP/UL multi-TRP) operation, two SRS resource sets of which SRS usage parameters are codebook and/or non-codebook (nonCodebook) are configured, and an applied transmission reception point is indicated via a field in DCI.

For example, for an asymmetric DL sTRP/UL mTRP operation, two SRS resource sets (the usage parameter is codebook/nonCodebook) may be configured for codebook/non-codebook based PUSCH transmission. The SRS resource set indication field may be used to indicate which TRP is applied.

In one example, a code point of an SRS resource set indication field may be used as follows: a site with DL/UL (DL/UL site) or a UL-only site is used for uplink reception.
- Code point "00": An SRI field and a precoding information and number of layers field are associated with a first SRS resource set;
- Code point "01": An SRI field and a precoding information and number of layers field are associated with a second SRS resource set;
- Code point "10": reserved;
- Code point "11": reserved.

In another example, a code point of an SRS resource set indication field may be used as follows: a site with DL/UL (DL/UL site) or a UL-only site is used for uplink reception, or both of the sites are used for uplink reception (PUSCH is transmitted in a repeating manner).
- Code point "00": An SRI field and a precoding information and number of layers field are associated with a first SRS resource set;
- Code point "01": An SRI field and a precoding information and number of layers field are associated with a second SRS resource set;
- Code point "10": An SRI field and a precoding information and number of layers field are associated with a first SRS resource set, while a second SRI field and a second precoding information and number of layers field are associated with a second SRS resource set;
- Code point "11": reserved or identical to the code point "10".

In yet another example, a code point of an SRS resource set indication field may be used as follows: a site with DL/UL (DL/UL site) or a UL-only site is used for uplink reception, or both of the sites are used for uplink reception (PUSCH is transmitted in a non-repeating manner).
- Code point "00": An SRI field and a precoding information and number of layers field are associated with a first SRS resource set;
- Code point "01": An SRI field and a precoding information and number of layers field are associated with a second SRS resource set;
- Code point "10": An SRI field and a precoding information and number of layers field are associated with a first SRS resource set, while a second SRI field and a second precoding information and number of layers field are associated with a second SRS resource set;
- Code point "11": reserved or identical to the code point "10".

In some embodiments, for an uplink and downlink asymmetric transmission reception point (asymmetric DL single TRP/UL multi-TRP) operation, two SRS resource sets of which SRS usage parameters are non-codebook (nonCodebook) are configured, and CSI-RS associated with the SRS resource set is not configured, or the SRS resource set associated with the first transmission reception point is configured with associated CSI-RS.

For example, for an asymmetric DL sTRP/UL mTRP operation, for non-codebook based PUSCH transmission, when two SRS resource sets (the usage parameter is nonCodebook) are configured, and associated CSI-RS is not configured. Alternatively, only one SRS resource set (e.g. a first SRS resource set) associated with a site with DL/UL (DL/UL site) may be configured with associated CSI-RS.

For another example, for an asymmetric DL sTRP/UL mTRP operation, for non-codebook based PUSCH transmission, only one SRS resource set is configured, and this SRS resource set is configured with associated CSI-RS. For example, this SRS resource set may be applied to FR1.

For another example, for an asymmetric DL sTRP/UL mTRP operation, for non-codebook based PUSCH transmission, only one SRS resource set is configured, and this SRS resource set is not configured with associated CSI-RS.

In some embodiments, for an uplink and downlink asymmetric transmission reception point (asymmetric DL single TRP/UL multi-TRP) operation, an SRS resource set of which the SRS usage parameter is antenna switching (antennaSwitching) is used for the first transmission reception point.

For example, for an asymmetric DL sTRP/UL mTRP operation, for antenna switching, an SRS resource set (the usage parameter is antennaSwitching) is only used for a site with DL/UL (DL/UL site). Alternatively, an SRS resource set (the usage parameter is antennaSwitching) may be used for a site with DL/UL (DL/UL site) and a UL-only site.

The SRS has been illustrated schematically hereinabove, and DCI enhancement will be explained further hereinbelow.

In some embodiments, a DCI format 2_3 is used to trigger SRS transmission, and a power control state for the SRS transmission is configured to be different from a power control state of PUSCH.

For example, for the DCI format 2_3, it may be applied to trigger SRS transmission configured with a power control state (a first power control state or a second power control state) different from that of PUSCH. In addition, restriction on applying to a PUSCH-less cell for the DCI format 2_3 may be removed.

In some embodiments, a DCI format 2_3 is used to trigger SRS transmission, and a power control state for the SRS transmission is configured to be the same as a power control state of PUSCH.

For example, for the DCI format 2_3, it may be applied to trigger SRS transmission configured with a power control state (a first power control state or a second power control state) the same as that of PUSCH.

In one example, the DCI format 2_3 is used to trigger SRS transmission with the usage parameter being antennaSwitching, or the DCI format 2_3 is used to trigger SRS transmission with one or more or all of the following usage parameters: codebook, nonCodebook, antennaSwitching, or beamManagement.

In another example, a closed-loop power control state may be indicated by the DCI format 2_3. For example, a new field may be introduced into each block of the DCI format 2_3 to indicate the power control state.

In yet another example, a second TPC command may be added to each block of the DCI format 2_3. Mapping between a TPC command and an SRS power control state may be explicitly indicated or implicitly defined.

In another example, a new RNTI may be introduced for the DCI format 2_3.

In some embodiments, a first DCI format is used for power control of SRS transmission, and the first DCI format indicates at least one of the following: an SRS request, a transmission power control (TPC) command, or an SRS power control state.

For example, a new DCI format may be introduced for SRS power control. The new DCI format may indicate one or more or all of the following information: an SRS request, a TPC command (there may possibly be one TPC command field or two TPC command fields), or an SRS power control state.

In some embodiments, the first DCI format is used for one or a group of terminal equipments; wherein a first RNTI is used for the first DCI format.

For example, a new DCI format may be applied to a single UE or a group of UEs. For another example, a new RNTI may be introduced for the new DCI format.

In some embodiments, a DCI format 0_1 or a DCI format 0_2 or a DCI format 1_1 or a DCI format 1_2 is used to trigger SRS transmission; wherein a transmission power control (TPC) command carried by DCI is used to trigger the SRS, and an added or reused field in the DCI is used to indicate an SRS power control state.

For example, for the DCI formats 0_1/0_2/1_1/1_2 capable of triggering SRS transmission, the TPC command carried by the DCI may be used for triggering SRS. The SRS power control state may be indicated by an added field, or by reusing an existing field, or by reusing some unused fields.

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from the above embodiments that the terminal equipment transmits the second uplink transmission at least according to a power control state for the SRS, and accordingly, appropriate power control for the SRS is able to be performed even under uplink and downlink asymmetric TRP operation scenarios, thereby being possible to improve accuracy and reliability of SRS transmission.

### Embodiments of a Second Aspect

The embodiments of the present application provide a method for receiving sounding reference signal (SRS), explained from a network device side. The embodiments of the second aspect may be combined with the embodiments of the first aspect, and the same content as the embodiments of the first aspect will not be repeated.

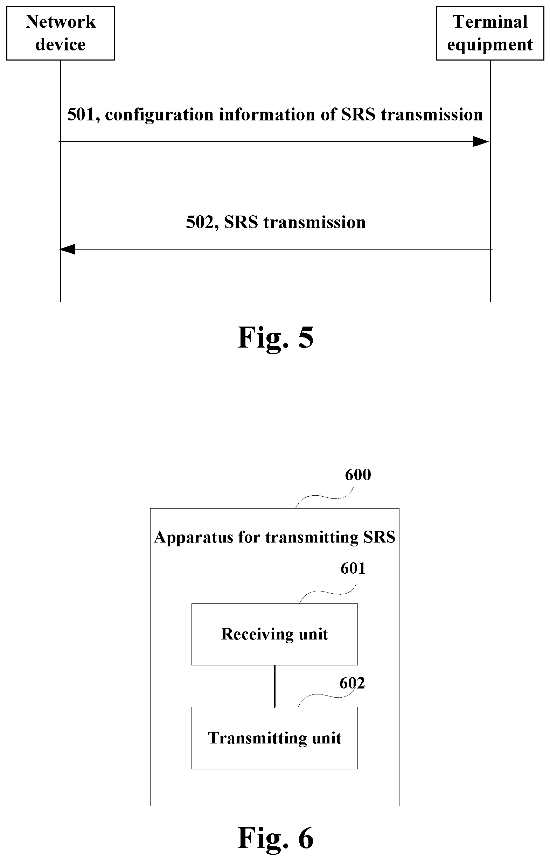

FIG. 5 is a schematic diagram of a method for receiving sounding reference signal (SRS) in embodiments of the present application, as shown in FIG. 5, the method including:
501: a network device transmits configuration information of sounding reference signal (SRS) to a terminal equipment; wherein the terminal equipment performs first uplink transmission and first downlink transmission with a first transmission reception point, and/or performs second uplink transmission with a second transmission reception point;
502: the network device receives the second uplink transmission, wherein the terminal equipment transmits the second uplink transmission at least according to a power control state for the SRS.

It is worth noting that FIG. 5 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 5 above.

The embodiments above only schematically illustrate the present application, but the present application is not limited to this, and appropriate variations may also be made on the basis of the above embodiments. For example, the above embodiments may be used separately, or one or more of the above embodiments may be combined.

Through the embodiments of the present application, the terminal equipment transmits the second uplink transmission at least according to a power control state for the SRS, and accordingly, appropriate power control for the SRS is able to be performed even under uplink and downlink asymmetric TRP operation scenarios, thereby being possible to improve accuracy and reliability of SRS transmission.

### Embodiments of a Third Aspect

The embodiments of the present application provide an apparatus for transmitting sounding reference signal (SRS). The apparatus may be, for example, a terminal equipment, or one or more parts or assemblies configured in the terminal equipment, and the same content as the embodiments of the first aspect will not be repeated.

FIG. 6 is a schematic diagram of an apparatus for transmitting sounding reference signal (SRS) in embodiments of the present application. As shown in FIG. 6, an apparatus 600 for transmitting sounding reference signal (SRS) includes:
a receiving unit 601 configured to receive configuration information of the sounding reference signal (SRS); wherein a terminal equipment performs first uplink transmission and first downlink transmission with a first transmission reception point (TRP), and/or performs second uplink transmission with a second transmission reception point (TRP);
a transmitting unit 602 configured to transmit the second uplink transmission at least according to a power control state for the SRS.

In some embodiments, the power control state for the SRS is different from a closed-loop power control state for a physical uplink shared channel (PUSCH).

In some embodiments, for at least one of the following SRS usage parameters: codebook, non-codebook (nonCodebook), antenna switching (antennaSwitching) or beam management (beamManagement), an SRS resource set is configured with one of:
a first closed-loop power control state the same as PUSCH;
a second closed-loop power control state the same as PUSCH;
a first closed-loop power control state different from PUSCH;
a second closed-loop power control state different from PUSCH.

In some embodiments, SRS usage parameter(s) are/is codebook and/or non-codebook, and the SRS resource set is configured with one of:
a first closed-loop power control state the same as PUSCH;
a second closed-loop power control state the same as PUSCH.

In some embodiments, the SRS usage parameter is antenna switching, and the SRS resource set is configured with one of:
a first closed-loop power control state different from PUSCH;
a second closed-loop power control state different from PUSCH.

In some embodiments, the SRS usage parameter is beam management, and the SRS resource set is configured with one of:
a first closed-loop power control state different from PUSCH;
a second closed-loop power control state different from PUSCH.

In some embodiments, for an uplink and downlink asymmetric transmission reception point (asymmetric DL single TRP/UL multi-TRP) operation, one SRS resource set is configured with one power control state.

In some embodiments, for the same SRS usage parameter, the number of SRS resource sets for an uplink and downlink asymmetric transmission reception point (asymmetric DL single TRP/UL multi-TRP) operation is greater than the number of SRS resource sets for a single TRP operation.

In some embodiments, for an uplink and downlink asymmetric transmission reception point (asymmetric DL single TRP/UL multi-TRP) operation, one SRS resource set is configured with two power control states, and an applied power control state is indicated by MAC CE and/or DCI.

In some embodiments, the two power control states are both different from power control state of PUSCH, or one of the two power control states is the same as the power control state of PUSCH while the other of the two power control states is different from the power control state of PUSCH, or the two power control states are both the same as the power control state of PUSCH.

In some embodiments, for an uplink and downlink asymmetric transmission reception point (asymmetric DL single TRP/UL multi-TRP) operation, two SRS resource sets of which SRS usage parameters are codebook and/or non-codebook are configured, and an applied transmission reception point is indicated via a field in DCI.

In some embodiments, for an uplink and downlink asymmetric transmission reception point (asymmetric DL single TRP/UL multi-TRP) operation, two SRS resource sets of which SRS usage parameters are non-codebook are configured, and CSI-RS associated with an SRS resource set is not configured, or an SRS resource set associated with the first transmission reception point is configured with associated CSI-RS.

In some embodiments, for an uplink and downlink asymmetric transmission reception point (asymmetric DL single TRP/UL multi-TRP) operation, an SRS resource set of which an SRS usage parameter is antenna switching is used for the first transmission reception point.

In some embodiments, a DCI format 2_3 is used to trigger SRS transmission, and the power control state for the SRS transmission is configured to be different from a power control state of PUSCH.

In some embodiments, a DCI format 2_3 is used to trigger SRS transmission, and the power control state for the SRS transmission is configured to be the same as a power control state of PUSCH.

In some embodiments, a first DCI format is used for power control of SRS transmission, and the first DCI format indicates at least one of the following: an SRS request, a transmission power control (TPC) command, or an SRS power control state.

In some embodiments, the first DCI format is used for one or a group of terminal equipments; wherein a first RNTI is used for the first DCI format.

In some embodiments, a DCI format 0_1 or a DCI format 0_2 or a DCI format 1_1 or a DCI format 1_2 is used to trigger SRS transmission.

In some embodiments, a transmission power control (TPC) command carried by DCI is used to trigger the SRS, and an added or reused field in the DCI is used to indicate an SRS power control state.

It is worth noting that only the components or modules related to the present application are illustrated hereinbefore, but the present application is not limited to this. The apparatus 600 for transmitting sounding reference signal (SRS) may further include other parts or modules, and the details of these parts or modules can be seen by referring to the related art.

In addition, for the sake of simplicity, FIG. 6 only illustratively shows the connection relationship or signal trend between the individual parts or modules, but it should be clear to those skilled in the art that various related techniques such as bus connections may be employed. The above individual parts or modules can be implemented by hardware facilities such as a processor, a memory, a transmitter, a receiver, etc., which is not limited in the present application.

Through the embodiments of the present application, the terminal equipment transmits the second uplink transmission at least according to a power control state for the SRS, and accordingly, appropriate power control for the SRS is able to be performed even under uplink and downlink asymmetric TRP operation scenarios, thereby being possible to improve accuracy and reliability of SRS transmission.

### Embodiments of a Fourth Aspect

The embodiments of the present application provide an apparatus for receiving sounding reference signal (SRS). The apparatus may be, for example, a network device, or one or more parts or assemblies configured in the network device, and the same content as the embodiment of the first to third aspects will not be repeated.

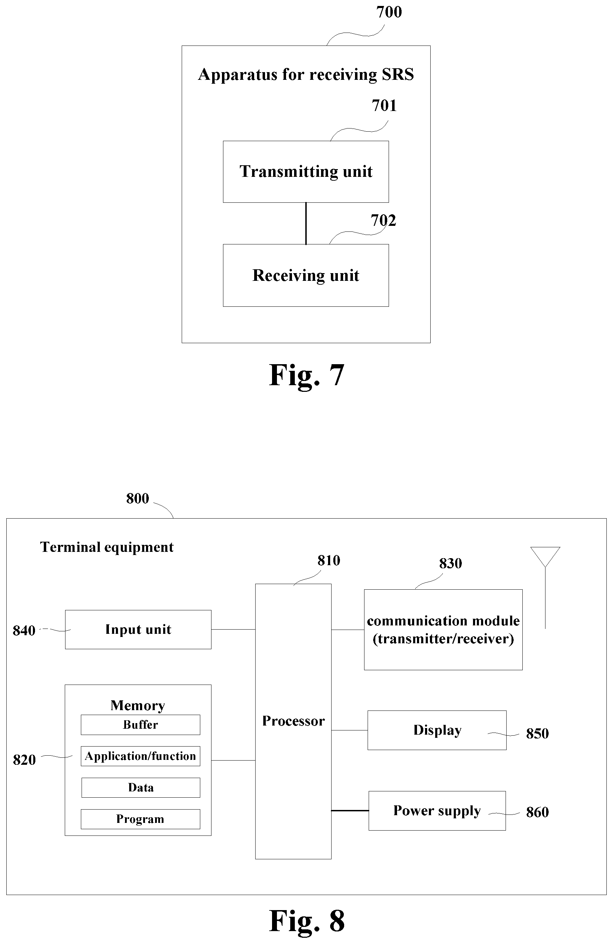

FIG. 7 is a schematic diagram of an apparatus for receiving sounding reference signal (SRS) in embodiments of the present application. As shown in FIG. 7, an apparatus 700 for receiving sounding reference signal (SRS) includes:
a transmitting unit 701 configured to transmit configuration information of sounding reference signal (SRS) to a terminal equipment; wherein the terminal equipment performs first uplink transmission and first downlink transmission with a first transmission reception point (TRP), and/or performs second uplink transmission with a second transmission reception point;
a receiving unit 702 configured to receive the second uplink transmission transmitted by the terminal equipment at least according to a power control state for the SRS.

It is worth noting that only the components or modules related to the present application are illustrated hereinbefore, but the present application is not limited to this. The apparatus 700 for receiving sounding reference signal (SRS) may further include other parts or modules, and the details of these parts or modules can be seen by referring to the related art.

In addition, for the sake of simplicity, FIG. 7 only illustratively shows the connection relationship or signal trend between the individual parts or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

Through the embodiments of the present application, the terminal equipment transmits the second uplink transmission at least according to a power control state for the SRS, and accordingly, appropriate power control for the SRS is able to be performed even under uplink and downlink asymmetric TRP operation scenarios, thereby being possible to improve accuracy and reliability of SRS transmission.

### Embodiments of a Fifth Aspect

The embodiments of the present application further provide a communication system, referring to FIG. 1, the same content as the embodiments in the first to fourth aspects will not be repeated.

In some embodiments, the communication system 100 may at least include:
a network device configured to transmit configuration information of sounding reference signal (SRS) to a terminal equipment; wherein the terminal equipment performs first uplink transmission and first downlink transmission with a first transmission reception point, and/or performs second uplink transmission with a second transmission reception point;
the terminal equipment configured to transmit the second uplink transmission at least according to a power control state for the SRS.

The embodiments of the present application further provide a terminal equipment, but which is not limited in the present application, and may also be other devices.

FIG. 8 is a schematic diagram of a terminal equipment in embodiment of the present application. As shown in FIG. 8, the terminal equipment 800 may include a processor 810 and a memory 820; the memory 820 stores data and program, and is coupled to the processor 810. It is worth noting that this figure is exemplary; other types of structures may also be used in addition to or instead of the structure to implement telecommunications functions or other functions.

For example, the processor 810 may be configured to execute the program to implement the method for transmitting sounding reference signal (SRS) as described in the embodiments of the first aspect. For example, the processor 810 may be configured to perform the following controls of: receiving configuration information of sounding reference signal (SRS); wherein the terminal equipment performs first uplink transmission and first downlink transmission with a first transmission reception point (TRP), and/or performs second uplink transmission with a second transmission reception point; and transmitting the second uplink transmission at least according to a power control state for the SRS.

As shown in FIG. 8, the terminal equipment 800 may further include a communication module 830, an input unit 840, a display 850, and a power supply 860. The functions of the above parts are similar to the relevant art, and will not be repeated here. It is worth noting that the terminal equipment 800 is not necessarily required to include all of the parts shown in FIG. 8, and the above parts are not essential; in addition, the terminal equipment 800 may further include parts not shown in FIG. 8, with reference to the relevant art.

The embodiments of the present application further provide a network device, which may be, for example, a base station, but which is not limited in the present application, and may also be other network devices.

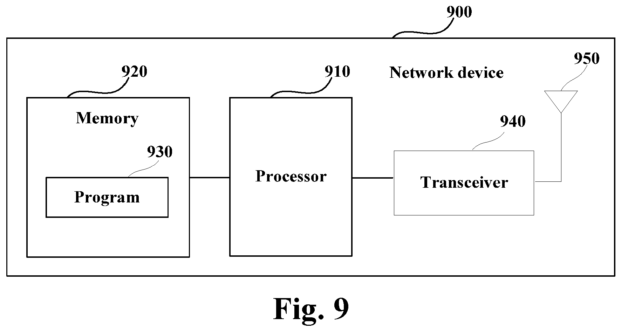

FIG. 9 is a schematic diagram of composition of the network device in embodiments of the present application. As shown in FIG. 9, the network device 900 may include a processor 910 (such as a central processing unit (CPU)) and a memory 920; the memory 920 is coupled to the processor 910. The memory 920 may store various data and also may store a program 930 for information processing, and the program 930 is executed under the control of the processor 910.

For example, the processor 910 may be configured to execute the program to implement the method for receiving sounding reference signal (SRS) as described in the embodiments of the second aspect. For example, the processor 910 may be configured to perform the following controls of: transmitting configuration information of sounding reference signal (SRS) to a terminal equipment; wherein the terminal equipment performs first uplink transmission and first downlink transmission with a first transmission reception point (TRP), and/or performs second uplink transmission with a second transmission reception point; and receiving the second uplink transmission transmitted by the terminal equipment at least according to a power control state for the SRS.

In addition, as shown in FIG. 9, the network device 900 may further include: a transceiver 940 and an antenna 950, etc.; wherein the functionalities of the above parts are similar to the relevant art, and will not be repeated here. It is worth noting that the network device 900 is not necessarily required to include all of the parts shown in FIG. 9; in addition, the network device 900 may further include parts not shown in FIG. 9, with reference to the relevant art.

The embodiments of the present application further provide a computer program which, when being executed in a terminal equipment, causes the terminal equipment to execute the method for transmitting sounding reference signal (SRS) described in the embodiments of the first aspect.

The embodiments of the present application further provide a storage medium storing a computer program which causes a terminal equipment to execute the method for transmitting sounding reference signal (SRS) described in the embodiments of the first aspect.

The embodiments of the present application further provide a computer program which, when being executed in a network device, causes the network device to execute the method for receiving sounding reference signal (SRS) described in the embodiments of the second aspect.

The embodiments of the present application further provide a storage medium storing a computer program which causes a network device to execute the method for receiving sounding reference signal (SRS) described in the embodiments of the second aspect.

The above apparatuses and methods of the present application can be implemented by hardware or by hardware combined with software. The present disclosure relates to a computer readable program which, when being executed by a logic unit, enables the logic unit to implement the apparatuses or components mentioned above, or enables the logic unit to implement the methods or steps described above The present application also relates to storage medium for storing the above programs, such as a hard disk, a magnetic disk, a compact disc, a DVD, a flash memory, etc.

The method/apparatus described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware assembly, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to principle of the application, and these variations and modifications should also be within the scope of the present application.

For implementation including the above embodiments, the following supplements are further disclosed:
1. A method for transmitting sounding reference signal (SRS), including:
   a terminal equipment receives configuration information of sounding reference signal (SRS); wherein the terminal equipment performs first uplink transmission and first downlink transmission with a first transmission reception point (TRP), and/or performs second uplink transmission with a second transmission reception point; and
   the terminal equipment transmits the second uplink transmission at least according to a power control state for the SRS.
2. A method for receiving sounding reference signal (SRS), including:
   a network device transmits configuration information of sounding reference signal (SRS) to a terminal equipment; wherein the terminal equipment performs first uplink transmission and first downlink transmission with a first transmission reception point, and/or performs second uplink transmission with a second transmission reception point;
   the network device receives the second uplink transmission transmitted by the terminal equipment at least according to a power control state for the SRS.
3. A terminal equipment including a memory storing a computer program and a processor configured to execute the computer program to implement the method for transmitting sounding reference signal (SRS) according to the supplement 1.
4. A network device including a memory storing a computer program and a processor configured to execute the computer program to implement the method for receiving sounding reference signal (SRS) according to the supplement 2.
5. A computer program product including at least a computer program which, when being executed by a processor, causes a terminal equipment to execute the method for transmitting sounding reference signal (SRS) according to the supplement 1.
6. A computer program product including at least a computer program which, when being executed by a processor, causes a network device to execute the method for receiving sounding reference signal (SRS) according to the supplement 2.

## Claims

1. An apparatus for transmitting sounding reference signal (SRS), comprising:
a receiving unit configured to receive configuration information of SRS; wherein a terminal equipment performs a first uplink transmission and a first downlink transmission with a first transmission reception point (TRP), and/or performs a second uplink transmission with a second transmission reception point (TRP); and
a transmitting unit configured to transmit the second uplink transmission at least according to a power control state for the SRS.

2. The apparatus according to claim 1, wherein the power control state for the SRS is different from a closed-loop power control state for physical uplink shared channel (PUSCH).

3. The apparatus according to claim 1, wherein for at least one of the following SRS usage parameters: codebook, non-codebook, antenna switching or beam management, an SRS resource set is configured with one of:
a first closed-loop power control state the same as PUSCH;
a second closed-loop power control state the same as PUSCH;
a first closed-loop power control state different from PUSCH; or
a second closed-loop power control state different from PUSCH.

4. The apparatus according to claim 1, wherein SRS usage parameter(s) is/are codebook and/or non-codebook, and an SRS resource set is configured with one of:
a first closed-loop power control state the same as PUSCH;
a second closed-loop power control state the same as PUSCH.

5. The apparatus according to claim 1, wherein an SRS usage parameter is antenna switching, and an SRS resource set is configured with one of:
a first closed-loop power control state different from PUSCH;
a second closed-loop power control state different from PUSCH.

6. The apparatus according to claim 1, wherein an SRS usage parameter is beam management, and an SRS resource set is configured with one of:
a first closed-loop power control state different from PUSCH;
a second closed-loop power control state different from PUSCH.

7. The apparatus according to claim 1, wherein one SRS resource set is configured with one power control state;
for the same SRS usage parameter, the number of SRS resource sets for an uplink and downlink asymmetric transmission reception point operation is greater than the number of SRS resource sets for a single transmission reception point operation.

8. The apparatus according to claim 1, wherein one SRS resource set is configured with two power control states, and an applied power control state is indicated by MAC CE and/or DCI.

9. The apparatus according to claim 8, wherein the two power control states are both different from a power control state of PUSCH, or one of the two power control states is the same as the power control state of PUSCH while the other of the two power control states is different from the power control state of PUSCH, or the two power control states are both the same as the power control state of PUSCH.

10. The apparatus according to claim 1, wherein two SRS resource sets of which SRS usage parameters are codebook and/or non codebook are configured, and an applied transmission reception point is indicated via a field in DCI.

11. The apparatus according to claim 1, wherein two SRS resource sets of which SRS usage parameters are non-codebook are configured, and CSI-RS associated with an SRS resource set is not configured, or an SRS resource set associated with the first transmission reception point is configured with an associated CSI-RS.

12. The apparatus according to claim 1, wherein an SRS resource set of which an SRS usage parameter is antenna switching is used for the first transmission reception point.

13. The apparatus according to claim 1, wherein a DCI format 2_3 is used to trigger an SRS transmission, and the power control state of the SRS transmission is configured to be different from the power control state of PUSCH.

14. The apparatus according to claim 1, wherein a DCI format 2_3 is used to trigger an SRS transmission, and the power control state of the SRS transmission is configured to be the same as the power control state of PUSCH.

15. The apparatus according to claim 1, wherein a first DCI format is used for power control of SRS transmission, and the first DCI format indicates at least one of the following: an SRS request, a transmission power control command or an SRS power control state.

16. The apparatus according to claim 15, wherein the first DCI format is used for one terminal equipment or a group of terminal equipments; wherein a first RNTI is used for the first DCI format.

17. The apparatus according to claim 1, wherein a DCI format 0_1 or a DCI format 0_2 or a DCI format 1_1 or a DCI format 1_2 is used to trigger SRS transmission.

18. The apparatus according to claim 17, wherein a transmission power control command carried by DCI is used to trigger SRS, and an added or reused field in the DCI is used to indicate an SRS power control state.

19. An apparatus for receiving sounding reference signal (SRS), comprising:
a transmitting unit configured to transmit configuration information of SRS to a terminal equipment; wherein the terminal equipment performs a first uplink transmission and a first downlink transmission with a first transmission reception point (TRP), and/or performs a second uplink transmission with a second transmission reception point; and
a receiving unit configured to receive the second uplink transmission transmitted by the terminal equipment at least according to a power control state for the SRS.

20. A communication system, comprising:
a network device configured to transmit configuration information of SRS to a terminal equipment; wherein the terminal equipment performs a first uplink transmission and a first downlink transmission with a first transmission reception point, and/or performs a second uplink transmission with a second transmission reception point;
a terminal equipment configured to transmit the second uplink transmission at least according to a power control state for the SRS.
